# EUROPÄISCHE PATENTANMELDUNG

(11) **EP 1 256 528 A1**
(43) Veröffentlichungstag der Anmeldung: **13.11.2002**
(21) Anmeldenummer: 01111494.9
(22) Anmeldetag: 11.05.2001
(51) Int. Cl.: B65G 21/20, B65G 17/32

(54) **Vakuumförderer**

(71) Anmelder: Systraplan Gesellschaft für Planung und Bau von materialflusstechnischen Anlagen mbH u. Co. KG, 32052 Herford (DE)
(72) Erfinder: Jostmeier, Hans, Dr.-Ing., 32049 Herford (DE)

(57) **Zusammenfassung**

Einrichtung zum Belüften von Saugöffnungen an umlaufenden Gurten.

Die Einrichtung besteht aus einem als Unterdruck-Windkessel (1), z. B. eines an den Enden abgeschlossenen Rechteckrohres (1'), das in einer Wandung mit in der Regel mehreren Öffnungen versehen ist, durch die nach innen Luft gesaugt wird.

Durch Anbringen eines kleinen mit Druckluft beaufschlagbaren Rohres (5) innerhalb des Rechteckrohres (1') wird der Saugluftstrom durch die Öffnungen des Rechteckrohres (1') nach innen unterbrochen, sofern die Öffnungen im Rohr (1') und (5) konzentrisch übereinander angeordnet sind.

Auf diese Weise können Werkstücke (4), die hängend an einem umlaufenden Sauggurt (2,3) transportiert werden, zum Abfallen vom Sauggurt gebracht werden, wobei der Sauggurt an der mit Öffnungen versehenen Wandung des Rechteckrohres (1') entlanggleitet.

## Beschreibung

Systeme mit umlaufenden Gurten, die mit Bohrungen oder ähnlichen Durchbrüchen versehen sind und durch die mit Hilfe eines Vakuumsystems Luft von außen nach innen gesaugt wird, sind seit langem bekannt! Mit diesen Systemen können angesaugte Teile über kurze oder lange Strecken am Sauggurt hängend von A nach B transportiert werden.

Da die Teile aber in der Regel nicht an derselben Stelle vom Sauggurt abfallen müssen, sind geeignete Maßnahmen zu ergreifen, um die Saugdurchbrüche oder Saugnäpfe an den Abgabestellen zu belüften, damit die Teile an definierter Stelle abfallen. Auf diese Weise können z. B. Teile, die an einer bestimmten Stelle vom Sauggurt übernommen werden, an unterschiedliche Stellen abgegeben werden, um sie nach bestimmten Kriterien zu sortieren.

Die unterschiedliche Abwurfmöglichkeit kann z. B. entsprechend DE19636160 dadurch realisiert werden, dass oberhalb des Sauggurtes steuerbare Unterdruckelemente oder mindestens ein Unterdruckelement angeordnet ist, das unabhängig von der übrigen Unterdruckeinrichtung mit Unterdruck beaufschlagbar bzw. davon abkoppelbar ist.

Eine zweite Möglichkeit ist entsprechend eigener Patentanmeldung (DE 10039126.5) bekannt, bei der nur ein Unterdruckelement vorhanden ist. Bei diesem System werden die Öffnungen des Unterdruckelements, die die Durchbrüche des Sauggurtes mit Unterdruck versorgen, mechanisch geschlossen.

Auf diese Weise können bestimmte Sektionen des umlaufenden Sauggurtes vom Vakuumsystem abgekoppelt werden, so dass die Teile gezielt abfallen können. Die beschriebenen Systeme sind ziemlich aufwändig und damit teuer.

Die Erfindung betrifft eine Einrichtung, die unmittelbar an den Öffnungen des Unterdrucksystems den Saugstrom dadurch unterbricht, dass Druckluft von innen in die Öffnungen geblasen wird. Hierdurch wird nicht nur der Saugstrom unterbrochen, sondern auch gleichzeitig Druckluft in die Öffnungen des Gurtes weiter in den Innenraum bzw. der auf den Öffnungen angeordneten Saugnäpfe geblasen, so dass die zuvor angesaugten Teile sehr schnell abfallen.
Hierdurch ist eine sehr exakte Platzierung der abfallenden Teile möglich. Außerdem ist das System in seinen Herstellungskosten preiswerter als die zuvor beschriebenen Einrichtungen.

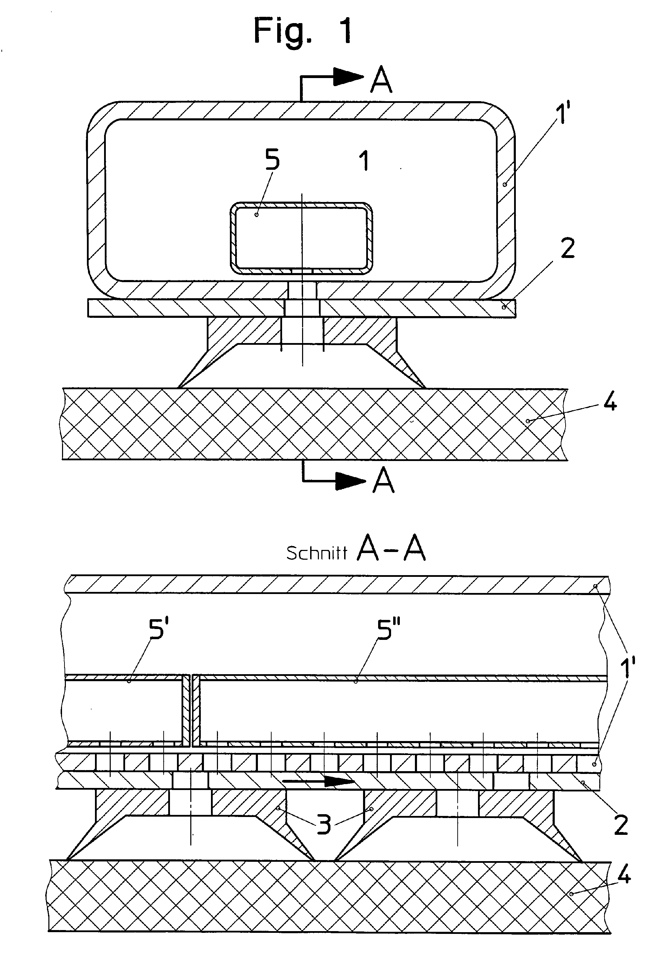

Eine mögliche Ausführung einer solchen Einrichtung ist in Fig. 1 dargestellt.
Ein Windkessel 1, bestehend aus einem Rechteckrohr 1', das an den Enden luftdicht abgeschlossen ist, ist mit einem Vakuumerzeuger verbunden. In einer Wandung des Rechteckrohres befinden sich mehrere Öffnungen, durch die die Durchbrüche des an dieser Wandung umlaufenden Gurtes 2 mit Saugluft versorgt werden. Der Gurt kann ggf. noch mit Saugnäpfen 3 bestückt sein, um Werkstücke 4 hängend transportieren zu können.

Um die Durchbrüche des Sauggurtes gezielt und sektionsweise belüften zu können und damit die transportierten Teile abfallen zu lassen, sind in dem Windkessel separate kleine Rohre 5 angeordnet, die mit Druckluft beaufschlagt werden können.

Durch konzentrische Anordnung der Bohrungen im Rohr 5 über den Öffnungen des Rechteckrohres 1' und die austretende Druckluft wird nicht nur der Unterdruck in der betreffenden Sektion unterbrochen, sondern auch sehr schnell die Öffnungen im Sauggurt und ggf. die z. B. angeklebten Saugnäpfe belüftet. Das hat zur Folge, dass die Teile sehr schnell und gut positioniert abfallen.

## Patentansprüche

1. Einrichtung zum Unterbrechen des Saugluftstromes an den Öffnungen in einem Saugwindkessel durch im Windkessel angebrachte Rohre, deren Bohrungen konzentrisch oberhalb der Öffnungen im Saugwindkessel angeordnet sind und die mit Druckluft zur Unterbrechung des Saugstromes beaufschlagt werden können, so dass zuvor angesaugte Teile vom Sauggurt abfallen.
